# EUROPEAN PATENT SPECIFICATION

(11) **EP 3 184 330 B1**
(45) Date of publication and mention of the grant of the patent: **29.01.2020**
(21) Application number: 16206182.4
(22) Date of filing: 22.12.2016
(51) Int. Cl.: B60D 5/00, B61D 17/22, B62D 47/02

(54) **DEVICE AND METHOD FOR PROTECTING ARTICULATED VEHICLES**
VORRICHTUNG UND VERFAHREN ZUM SCHÜTZEN VON GELENKFAHRZEUGEN
DISPOSITIF ET PROCEDE DE PROTECTION DES VÉHICULES ARTICULÉS

(30) Priority: 22.12.2015 IT UB20159591
(43) Date of publication of application: 28.06.2017
(73) Proprietor: P.E.I. Protezioni Elaborazioni Industriali S.r.l., 40012 Calderara di Reno (Bologna) (IT)
(72) Inventor: GUIDI, Luca, 40131 Bologna (IT); TABELLINI, Giorgio, 40037 Sasso Marconi (Bologna) (IT)
(74) Representative: Milli, Simone

(56) References cited:
- EP-A1- 2 149 463
- DE-U1- 29 509 204

## Description

This invention relates to a device and a method for protecting articulated vehicles, in particular a device for protecting the bodywork of articulated buses.

In the sector in question, several protective devices for articulated vehicles are known which are adapted to allow protecting the zone between one carriage and another, where there is normally an articulation device connecting one carriage to the other and known in technical jargon as "fifth wheel".

It should be noted that the zone between one carriage and another in these articulated vehicles comprises an external bellows which defines the side walls and roof of the region connecting the carriages to each other.

Inside the articulated vehicle, there is normally a further protective device, designed to isolate the inside wall of the external bellows, that is to say, designed to isolate further mechanical components present therein. Document EP 2 149 463 A1 discloses a protective device according to the preamble of claim 1.

One aim of this invention, therefore, is to provide a protective device for carriages of articulated vehicles, in particular articulated buses, which is particularly simple, practical and inexpensive.

A further aim of this invention is to provide a protective device for carriages of articulated vehicles which is particularly robust and able to be applied to articulated vehicles very easily.

The technical features of the invention, with reference to the above aims, are clearly described in the claims below and its advantages are apparent from the detailed description which follows, with reference to the accompanying drawings which illustrate a preferred, non-limiting example embodiment of the invention, and in which:

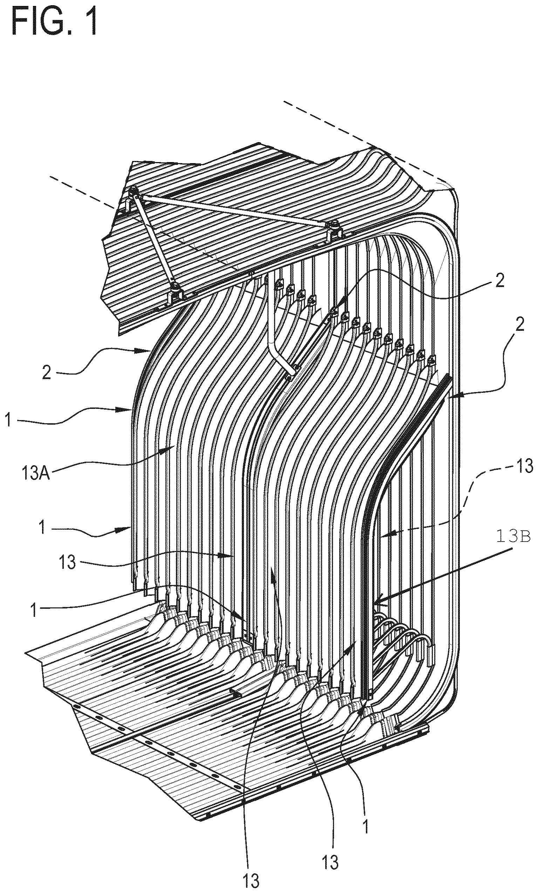

- Figure 1 shows a perspective view of the protective device of this invention, applied to an articulated bus;

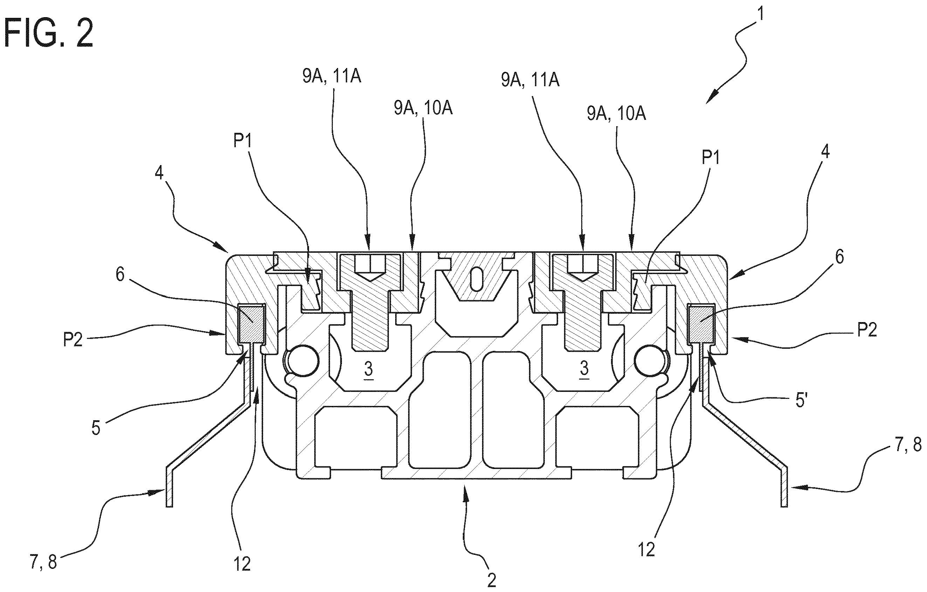

- Figure 2 is a cross-section of a detail of the protective device of this invention;

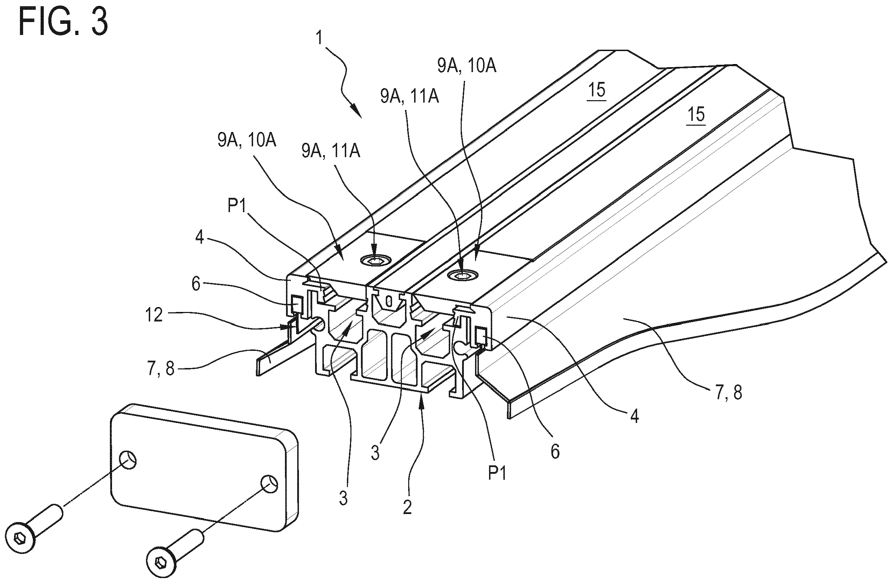

- Figure 3 is an exploded view in cross-section of a detail of the protective device of this invention.

With reference to the accompanying drawings, the numeral 1 denotes a protective device for vehicles provided with a plurality of carriages, preferably articulated buses.

According to the invention, the device 1 comprises:
- a frame 2 provided with a receiving cavity 3 extending along a longitudinal direction;
- a coupling member 4 provided with a projecting portion P1 shaped to be inserted into the receiving cavity 3 and a supporting portion P2 in which a housing cavity 5 is made;
- a tubular member 6 configured to be inserted into the housing cavity 5 in such a way as to be coupled to the coupling member 4;
- a laminar member 7 defining a bellows 8 and, in use, stably connected to the tubular member 6;
- at least one pair of locking elements (9A,9B) configured to be inserted in use into the receiving cavity 3 in two different (end) regions in order to lock the coupling member 4 to the frame 2 (in the receiving cavity 3 thereof).

It should be noted that the first projecting portion P1 preferably has the shape of an "L".

According to another aspect, each of the locking elements (9A,9B) comprises a plug (10A,10B), configured to be inserted into the receiving cavity 3, and a threaded member (11A,11B) operating on the plug (10A,10B) and adapted to be screwed to the frame 2 in such a way as to lock the respective plug (10A,10B) inside the receiving cavity 3.

Preferably, the tubular member 6 is circular in cross section.

Alternatively, the tubular member 6 is square or rectangular in cross section.

Alternatively, the tubular member 6 is formed from a flexible member which is bent (to define the tubular member) and comprises a zip hinge portion, called "zip" for short.

According to another aspect, the tubular member 6 is configured to be inserted in the housing cavity 5 in such a way that it can slide in the housing cavity 5 (in effect, it is inserted by sliding).

It should be noted that the tubular member 6 preferably has a rectangular or square cross section.

Alternatively, the tubular member 6 has a circular cross section: in this case, it is preferably inserted in the housing cavity 5 in such a way that it can rotate.

Also preferably, the laminar member 7 is, in use, fixedly connected directly or indirectly to the tubular member 6.

According to another aspect, the device 1 comprises a connecting member 12 which is coupled to the tubular member 6 (preferably wound on itself) and to which the laminar member 7 is connected, and in use, when the tubular member 6 is inserted into the housing cavity 5, the connecting member 12 is partly protruding from the housing cavity 5.

It should be noted that the connecting member 12 may be a quick-release coupling, preferably of the hinge type.

It should be noted that the laminar member 7 is connected to the portion of the coupling member 12 protruding from the housing cavity 5.

Also defined according to the invention is an articulated vehicle comprising at least a first and a second carriage (or passenger carrying unit) joined to each other by an articulated joint ("fifth wheel") at a connecting zone, and further comprising:
- a bellows 13 for protecting and closing the connecting zone and having an inside wall 13A and an outside wall 13B facing the outside of the vehicle (the terms "inside" and "outside" being used to denote the wall facing towards the zone occupied by the users of the vehicle and the wall facing towards the exterior of the vehicle, respectively);
- a protective device 1 as described in the foregoing, wherein the frame 2 is positioned at a zone delimited by the inside wall 13A of the protective bellows 13.

It should be noted that the protective device of this invention is substantially applied for the protection of the inside wall 13A of the bellows 13, that is, of mechanical components of the articulated vehicle.

It should also be noted that, relative to the main direction of longitudinal extension of the articulated vehicle, the receiving cavity 3 is open transversely, towards the inside of the vehicle.

It should be observed that, to all intents and purposes, the bellows 8 serves a protective function and also hides from view the rearwardly mounted components (that is, those facing towards the inside wall 13A of the bellows 13).

Advantageously, the device 1 is particularly simple and inexpensive.

In particular, it is very quick and easy to install (assemble/disassemble). Also, advantageously, the coupling member 4 is made by calendering: that means the coupling member is, advantageously, particularly economical. Preferably, the coupling member 4 is made of a metallic or plastic material. Preferably, the tubular member 6 is made of a metallic or plastic material. Preferably, the laminar member 7 is made of a plastic material or of fabric. Also, the connecting member 12 is preferably made of a plastic material or of fabric (preferably different from the type of material used for the laminar member 7).

Preferably, the laminar member 7 is sewn to the connecting member 12.

It should be noted that the cavity 3 is covered by a gasket 15 which preferably extends for the full length of the cavity 3.

According to another aspect, also defined is a method for protecting a connecting zone joining two carriages (that is, distinct passenger carrying units connected to each other) of an articulated bus, comprising the following steps:
- preparing, at the connecting zone joining two carriages (or units), a frame 2 provided with a receiving cavity 3 extending along a longitudinal direction (facing towards the inside of the connecting zone);
- preparing a coupling member 4 provided with a projecting portion P1 shaped to be inserted into the receiving cavity 3 and a supporting portion P2 in which a housing cavity 5 is made;
- preparing a tubular member 6 configured to be inserted into the housing cavity 5 in such a way as to be coupled to the coupling member 4;
- preparing a laminar member 7 defining a bellows 8;
- connecting the laminar member 7 to the tubular member 6 directly or indirectly;
- inserting the tubular member 6 into the housing cavity 5;
- preparing at least one pair of locking elements (9A,9B) configured to be inserted into the receiving cavity 3;
- inserting the locking elements (9A,9B) into the receiving cavity 3 in two different zones;
- locking the locking elements (9A,9B) to the frame 2 inside the receiving cavity 3 in order to removably connect the coupling member 4 to the receiving cavity 3.

According to another aspect, the step of inserting the locking elements (9A,9B) into the receiving cavity 3 in two different zones comprises a step of placing the locking elements (9A,9B) in the receiving cavity 3 in the proximity of opposite longitudinal ends of the coupling member 4.

According to another aspect, the step of locking the locking elements (9A,9B) to the receiving cavity 3 comprises a step of screwing the locking members (9A,9B) to the frame 2.

According to yet another aspect, the coupling member 4 is obtained by calendering.

According to yet another aspect, the step of locking the locking elements (9A,9B) to the receiving cavity 3 to removably connect the coupling member 4 to the receiving cavity 3 comprises a step of connecting the coupling member 4 to the receiving cavity 3 by the effect of friction of the coupling member 4 against the side walls of the locking members (9A,9B) and of the receiving cavity 3.

It should also be noted that the step of making the coupling member 4 by calendering allows guaranteeing an optimum fit in the receiving cavity 3.

## Claims

1. A protective device (1) for an articulated vehicle provided with a plurality of carriages connected by an articulated joint, comprising:
- a frame (2) provided with a receiving cavity (3) extending along a longitudinal direction;
- a coupling member (4) provided with a projecting portion (P1) shaped to be inserted into the receiving cavity (3) and a supporting portion (P2) in which a housing cavity (5) is made;
- a tubular member (6) configured to be inserted into the housing cavity (5) in such a way as to be coupled to the coupling member (4);
- a laminar member (7) defining a bellows (8) and stably connected in use, directly or indirectly, to the tubular member (6);
- at least one pair of locking elements (9A,9B) configured to be inserted in use into the receiving cavity (3) in two different regions in order to lock the coupling member (4) to the frame (2), **characterized in that** each of the locking elements (9A,9B) comprises a plug (10A,10B), configured to be inserted into the receiving cavity (3), and a threaded member (11A,11B) operating on the plug (10A,10B) and adapted to be screwed to the frame (2) in such a way as to lock the plug (10A,10B) inside the receiving cavity (3).

2. The device according to the preceding claim, wherein the tubular member (6) is circular in cross section.

3. The device according to any one of the preceding claims, wherein the tubular member (6) is configured to be inserted slidably into the housing cavity (5).

4. The device according to any one of the preceding claims, wherein the laminar member (7) is, in use, irremovably connected to the tubular member (6).

5. The device according to any one of the preceding claims, comprising a connecting member (12) coupled to the tubular member (6) and to which the laminar member (7) is connected and which, in use, when the tubular member (6) is inserted into the housing cavity (5), is partly protruding from the housing cavity (5).

6. The device according to the preceding claim, wherein the laminar member (7) is coupled to the portion of the connecting member (12) protruding from the housing cavity (5).

7. The device according to any one of the preceding claims, wherein the coupling member (4) extends substantially for the full length of the receiving cavity (3).

8. An articulated vehicle comprising at least a first and a second carriage joined to each other by an articulated joint at a connecting zone, and further comprising:
- a protective bellows (13) for protecting the connecting zone and having an inside wall (13A) and a wall (13B) facing the outside of the vehicle;
- a protective device (1) according to the preceding claims, wherein the frame (2) is positioned at an internal zone delimited by the inside wall (13A) of the protective bellows (13).

9. A method for protecting a connecting zone joining two carriages of an articulated bus with a protecting device (1) according to any of the previous claims, **characterized in that** it comprises the following steps:
- preparing, at the connecting zone joining two carriages, the frame (2) provided with the receiving cavity (3) extending along a longitudinal direction;
- preparing the coupling member (4) provided with the projecting portion (P1) shaped to be inserted into the receiving cavity (3) and the supporting portion (P2) in which the housing cavity (5) is made;
- preparing the tubular member (6) configured to be inserted into the housing cavity (5) in such a way as to be coupled to the coupling member (4);
- preparing the laminar member (7) defining the bellows (8);
- connecting the laminar member (7) to the tubular member (6) directly or indirectly;
- inserting the tubular member (6) into the housing cavity (5);
- preparing the at least one pair of locking elements (9A,9B) configured to be inserted into the receiving cavity (3);
- inserting the locking elements (9A,9B) into the receiving cavity (3) in two different zones;
- locking the locking elements (9A,9B) to the frame (2) inside the receiving cavity (3) in order to removably connect the coupling member (4) to the receiving cavity (3), wherein the step of locking the locking elements (9A,9B) to the receiving cavity (3) comprises a step of screwing the locking members (9A,9B) to the frame (2)..

10. The method according to the preceding claim, wherein the step of inserting the locking elements (9A,9B) into the receiving cavity (3) in two different zones comprises a step of placing the locking elements (9A,9B) in the receiving cavity (3) in the proximity of opposite longitudinal ends of the coupling member (4).

11. The method according to any one of claims 9 to 10, wherein the coupling member (4) is obtained by calendering.

12. The method according to any one of claims 9 to 11, wherein the step of locking the locking elements (9A,9B) to the receiving cavity (3) to removably connect the coupling member (4) to the receiving cavity (3) comprises a step of connecting the coupling member (4) to the receiving cavity (3) by the effect of friction of the coupling member (4) against the side walls of the locking members (9A,9B) and of the receiving cavity (3).

## Patentansprüche

1. Schutzvorrichtung (1) für ein Gelenkfahrzeug, ausgestattet mit einer Vielzahl an Wagen, die durch eine Gelenkkupplung verbunden sind, umfassend:
- einen Rahmen (2), versehen mit einem Aufnahmehohlraum (3), der sich entlang einer Längsrichtung erstreckt;
- ein Kupplungselement (4), versehen mit einem hervorstehenden Abschnitt (P1), der ausgeformt ist, um in den Aufnahmehohlraum (3) eingefügt zu werden, und mit einem stützenden Abschnitt (P2), in dem ein Gehäusehohlraum (5) ausgebildet ist;
- ein Rohrelement (6), das ausgelegt ist, um in den Gehäusehohlraum (5) eingefügt zu werden, sodass es mit dem Kupplungselement (4) gekuppelt wird;
- ein Laminarelement (7), definierend einen Balg (8), und in Verwendung stabil direkt oder indirekt mit dem Rohrelement (6) verbunden;
- mindestens ein Paar Verriegelungselemente (9A, 9B), die ausgelegt sind, um in Verwendung in den Aufnahmehohlraum (3) in zwei unterschiedlichen Regionen eingefügt zu werden, um das Kupplungselement (4) am Rahmen (2) festzuspannen, **dadurch gekennzeichnet, dass** ein jedes der Verriegelungselemente (9A, 9B) einen Stopfen (10A, 10B) umfasst, der ausgelegt ist, um in den Aufnahmehohlraum (3) eingefügt zu werden, und ein Gewindeelement (11A, 11B), wirkend auf den Stopfen (10A, 10B) und ausgelegt, um am Rahmen (2) angeschraubt zu werden, sodass der Stopfen (10A, 10B) im Aufnahmehohlraum (3) festgespannt wird.

2. Vorrichtung nach dem vorhergehenden Anspruch, wobei das Rohrelement (6) einen kreisförmigen Querschnitt aufweist.

3. Vorrichtung nach einem der vorhergehenden Ansprüche, wobei das Rohrelement (6) ausgelegt ist, um verschiebbar in den Gehäusehohlraum (5) eingefügt zu werden.

4. Vorrichtung nach einem der vorhergehenden Ansprüche, wobei das Laminarelement (7) in Verwendung nicht entfernbar mit dem Rohrelement (6) verbunden ist.

5. Vorrichtung nach einem der vorhergehenden Ansprüche, umfassend ein Verbindungselement (12), das mit dem Rohrelement (6) gekuppelt ist und mit dem das Laminarelement (7) verbunden ist und das in Verwendung teilweise aus dem Gehäusehohlraum (5) hervorsteht, wenn das Rohrelement (6) in den Gehäusehohlraum (5) eingefügt ist.

6. Vorrichtung nach dem vorhergehenden Anspruch, wobei das Laminarelement (7) mit dem Abschnitt des Verbindungselements (12), der aus dem Gehäusehohlraum (5) hervorsteht, gekuppelt ist.

7. Vorrichtung nach einem der vorhergehenden Ansprüche, wobei das Kupplungselement (4) sich im Wesentlichen über die gesamte Länge des Aufnahmehohlraums (3) erstreckt.

8. Gelenkfahrzeug, umfassend mindestens einen ersten und einen zweiten Wagen, die miteinander mittels einer Gelenkkupplung an einer Verbindungszone zusammengefügt sind, und zudem umfassend:
- einen Schutzbalg (13), um die Verbindungszone zu schützen, aufweisend eine Innenwand (13A) und eine Wand (13B), die der Außenseite des Fahrzeugs zugewandt ist;
- eine Schutzvorrichtung (1) nach den vorhergehenden Ansprüchen, wobei der Rahmen (2) an einer Innenzone positioniert ist, die durch die Innenwand (13A) des Schutzbalgs (13) abgegrenzt ist.

9. Verfahren zum Schutz einer Verbindungszone, die zwei Wagen eines Gelenkbusses mit einer Schutzvorrichtung (1) nach einem der vorhergehenden Ansprüche zusammenfügt, **dadurch gekennzeichnet, dass** es die folgenden Schritte umfasst:
- an der Verbindungszone, die zwei Wagen zusammenfügt, Vorbereiten des Rahmens (2), der mit dem Aufnahmehohlraum (3) versehen ist, der sich entlang einer Längsrichtung erstreckt;
- Vorbereiten des Kupplungselements (4), versehen mit dem hervorstehenden Abschnitt (P1), der ausgeformt ist, um in den Aufnahmehohlraum (3) eingefügt zu werden, und mit dem stützenden Abschnitt (P2), in dem ein Gehäusehohlraum (5) ausgebildet ist;
- Vorbereiten des Rohrelements (6), das ausgelegt ist, um in den Gehäusehohlraum (5) eingefügt zu werden, sodass es mit dem Kupplungselement (4) gekuppelt wird;
- Vorbereiten des Laminarelements (7), definierend den Balg (8);
- Verbinden des Laminarelements (7) direkt oder indirekt mit dem Rohrelement (6);
- Einfügen des Rohrelements (6) in den Gehäusehohlraum (5) ;
- Vorbereiten von mindestens einem Paar Verriegelungselemente (9A, 9B), die ausgelegt sind, um in den Aufnahmehohlraum (3) eingefügt zu werden;
- Einfügen der Verriegelungselemente (9A, 9B) in den Aufnahmehohlraum (3) in zwei verschiedenen Zonen;
- Festspannen der Verriegelungselemente (9A, 9B) am Rahmen (2) im Aufnahmehohlraum (3), um das Kupplungselement (4) entfernbar mit dem Aufnahmehohlraum (3) zu verbinden, wobei der Schritt zum Festspannen der Verriegelungselemente (9A, 9B) am Aufnahmehohlraum (3) einen Schritt zum Anschrauben der Verriegelungselemente (9A, 9B) am Rahmen (2) umfasst.

10. Verfahren nach dem vorhergehenden Anspruch, wobei der Schritte zum Einfügen der Verriegelungselemente (9A, 9B) in den Aufnahmehohlraum (3) in zwei verschiedenen Zonen einen Schritt zum Platzieren der Verriegelungselemente (9A, 9B) im Aufnahmehohlraum (3) in der Nähe von entgegengesetzten Längsenden des Kupplungselements (4) umfasst.

11. Verfahren nach einem der Ansprüche 9 bis 10, wobei das Kupplungselement (4) durch Kalandrieren erhalten wird.

12. Verfahren nach einem der Ansprüche 9 bis 11, wobei der Schritt zum Festspannen der Verriegelungselemente (9A, 9B) am Aufnahmehohlraum (3), um das Kupplungselement (4) entfernbar mit dem Aufnahmehohlraum (3) zu verbinden, einen Schritt zum Verbinden des Kupplungselements (4) mit dem Aufnahmehohlraum (3) durch Reibung des Kupplungselements (4) gegen die Seitenwände der Verriegelungselemente (9A, 9B) und des Aufnahmehohlraums (3) umfasst.

## Revendications

1. Dispositif de protection (1) pour un véhicule articulé pourvu d'une pluralité de voitures reliées par un joint articulé, comprenant :
- un châssis (2) pourvu d'une cavité de réception (3) se prolongeant le long d'une direction longitudinale ;
- un organe d'accouplement (4) pourvu d'une portion (P1) en saillie façonnée pour être introduite dans la cavité de réception (3) et une portion de support (P2) dans laquelle est réalisée une cavité de logement (5) ;
- un organe tubulaire (6) configuré pour être introduit dans la cavité de logement (5) de manière à être accouplé à l'organe d'accouplement (4) ;
- un organe laminaire (7) définissant un soufflet (8) et stablement relié pendant l'utilisation, directement ou indirectement, à l'organe tubulaire (6) ;
- au moins une paire d'éléments de blocage (9A, 9B) configurés pour être introduits pendant l'utilisation dans la cavité de réception (3) dans deux zones différentes afin de bloquer l'organe d'accouplement (4) au châssis (2), **caractérisé en ce que** chacun des éléments de blocage (9A, 9B) comprend une cheville (10A, 10B), configurée pour être introduite dans la cavité de réception (3), et un organe fileté (11A, 11B) agissant sur la cheville (10A, 10B) et adapté pour être vissé au châssis (2) de manière à bloquer la cheville (10A, 10B) à l'intérieur de la cavité de réception (3).

2. Dispositif selon la revendication précédente, dans lequel l'organe tubulaire (6) est circulaire en section transversale.

3. Dispositif selon l'une quelconque des revendications précédentes, dans lequel l'organe tubulaire (6) est configuré pour être introduit de façon coulissante dans la cavité de logement (5).

4. Dispositif selon l'une quelconque des revendications précédentes, dans lequel l'organe laminaire (7) est, pendant l'utilisation, relié de façon inamovible à l'organe tubulaire (6).

5. Dispositif selon l'une quelconque des revendications précédentes, comprenant un organe de raccordement (12) accouplé à l'organe tubulaire (6) et auquel est relié l'organe laminaire (7) et qui, pendant l'utilisation, lorsque l'organe tubulaire (6) est introduit dans la cavité de logement (5), dépasse partiellement de la cavité de logement (5).

6. Dispositif selon la revendication précédente, dans lequel l'organe laminaire (7) est accouplé à la portion de l'organe de raccordement (12) dépassant de la cavité de logement (5).

7. Dispositif selon l'une quelconque des revendications précédentes, dans lequel l'organe d'accouplement (4) se prolonge substantiellement sur toute la longueur de la cavité de réception (3).

8. Véhicule articulé comprenant au moins une première et une seconde voiture jointes l'une à l'autre par un joint articulé en correspondance d'une zone de raccordement, et comprenant de plus :
- un soufflet de protection (13) pour protéger la zone de raccordement et comportant une cloison intérieure (13A) et une cloison (13B) tournée vers l'extérieur du véhicule ;
- un dispositif de protection (1) selon les revendications précédentes, dans lequel le châssis (2) est positionné en correspondance d'une zone intérieure délimitée par la cloison intérieure (13A) du soufflet de protection (13).

9. Procédé de protection d'une zone de raccordement joignant deux voitures d'un bus articulé à un dispositif de protection (1) selon l'une quelconque des revendications précédentes, **caractérisé en ce qu'**il comprend les étapes suivantes :
- préparer, en correspondance de la zone de raccordement joignant les deux voitures, le châssis (2) pourvu de la cavité de réception (3) se prolongeant le long d'une direction longitudinale ;
- préparer l'organe d'accouplement (4) pourvu d'une portion (P1) en saillie façonnée pour être introduite dans la cavité de réception (3) et la portion de support (P2) dans laquelle est réalisée la cavité de logement (5) ;
- préparer l'organe tubulaire (6) configuré pour être introduit dans la cavité de logement (5) de manière à être accouplé à l'organe d'accouplement (4) ;
- préparer l'organe laminaire (7) définissant le soufflet (8) ;
- raccorder l'organe laminaire (7) à l'organe tubulaire (6) directement ou indirectement ;
- introduire l'organe tubulaire (6) dans la cavité de logement (5) ;
- préparer l'au moins une paire d'éléments de blocage (9A, 9B) configurés pour être introduits dans la cavité de réception (3) ;
- introduire les éléments de blocage (9A, 9B) dans la cavité de réception (3) dans deux zones différentes ;
- bloquer les éléments de blocage (9A, 9B) au châssis (2) à l'intérieur de la cavité de réception (3) afin de relier de façon amovible l'organe d'accouplement (4) à la cavité de réception (3), dans lequel l'étape consistant à bloquer les éléments de blocage (9A, 9B) à la cavité de réception (3) comprend une étape consistant à visser les organes de blocage (9A, 9B) au châssis (2).

10. Procédé selon la revendication précédente, dans lequel l'étape consistant à introduire les éléments de blocage (9A, 9B) dans la cavité de réception (3) dans deux zones différentes comprend une étape consistant à placer les éléments de blocage (9A, 9B) dans la cavité de réception (3) à proximité des extrémités longitudinales opposées de l'organe d'accouplement (4).

11. Procédé selon l'une quelconque des revendications de 9 à 10, dans lequel l'organe d'accouplement (4) est obtenu par calandrage.

12. Procédé selon l'une quelconque des revendications de 9 à 11, dans lequel l'étape consistant à bloquer les éléments de blocage (9A, 9B) à la cavité de réception (3) pour relier de façon amovible l'organe d'accouplement (4) à la cavité de réception (3) comprend une étape consistant à relier l'organe d'accouplement (4) à la cavité de réception (3) sous l'effet du frottement de l'organe d'accouplement (4) contre les cloisons latérales des organes de blocage (9A, 9B) et de la cavité de réception (3).
